# EUROPEAN PATENT APPLICATION

(11) **EP 4 067 692 A1**
(43) Date of publication of application: **05.10.2022**
(21) Application number: 19954251.5
(22) Date of filing: 27.11.2019
(51) Int. Cl.: F16F 15/03, F16F 6/00

(54) **SUPPORT DEVICE AND SUPPORT UNIT**

(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: MARUYAMA, Yutaka, Kawasaki-shi, Kanagawa 212-0013 (JP); ISHII, Yuji, Kawasaki-shi, Kanagawa 212-0013 (JP)
(74) Representative: AWA Sweden AB
(86) International application number: PCT/JP2019/046270
(87) International publication number: WO 2021/106094

(57) **Abstract**

A support device of an embodiment includes a magnet unit, a first member, a second member, a magnetic member, and a magnetic fluid. The magnet unit generates a magnetic force. The first member is formed of a non-magnetic material and is disposed in a first direction of the magnet unit. The second member is formed of a non-magnetic material and is disposed in the first direction of the first member. The magnetic member is formed of a magnetic material and is disposed in the first direction of the second member. The magnetic fluid is disposed between the first member and the second member.

## Description

### [Technical Field]

Embodiments of the present invention relate to a support device and a support unit.

### [Background Art]

Various support devices supporting support objects are utilized. There is a demand for a support device capable of exhibiting a support force and a damping effect for multiple degrees of freedom.

### [Citation List]

### [Patent Document]

[Patent Document 1]
   Japanese Unexamined Patent Application, First Publication No. 2006-242363
[Patent Document 2]
   Japanese Unexamined Patent Application, First Publication No. H6-185527
[Patent Document 3]
   Japanese Unexamined Patent Application, First Publication No. 2014-134238
[Patent Document 4]
   PCT International Publication No. WO 2013/153741

### [Summary of Invention]

### [Technical Problem]

A problem to be solved by the present invention is to provide a support device and a support unit capable of exhibiting a support force and a damping effect for multiple degrees of freedom.

### [Solution to Problem]

A support device of an embodiment includes a magnet unit, a first member, a second member, a magnetic member, and a magnetic fluid. The magnet unit generates a magnetic force. The first member is formed of a non-magnetic material and is disposed in a first direction of the magnet unit. The second member is formed of a non-magnetic material and is disposed in the first direction of the first member. The magnetic member is formed of a magnetic material and is disposed in the first direction of the second member. The magnetic fluid is disposed between the first member and the second member.

### [Brief Description of Drawings]

Fig. 1 is a side cross-sectional view of a support device of a first embodiment.
Fig. 2 is a plan view of the support device of the first embodiment.
Fig. 3 is an explanatory view of a magnetic circuit.
Fig. 4 is an explanatory view of a support force in an XY direction.
Fig. 5 is a side cross-sectional view of a support device according to a first modified example of the first embodiment.
Fig. 6 is a side cross-sectional view of a support device according to a second modified example of the first embodiment.
Fig. 7 is a side cross-sectional view of a support device of a second embodiment.
Fig. 8 is a plan view of the support device of the second embodiment.
Fig. 9 is a side view of a support unit of a third embodiment.
Fig. 10 is a plan view of the support unit of the third embodiment.
Fig. 11 is a side view of a support unit of a modified example of the third embodiment.
Fig. 12 is a plan view of the support unit of the modified example of the third embodiment.

### [Description of Embodiments]

Hereinafter, a support device and a support unit of an embodiment will be described with reference to the drawings.

### (First embodiment)

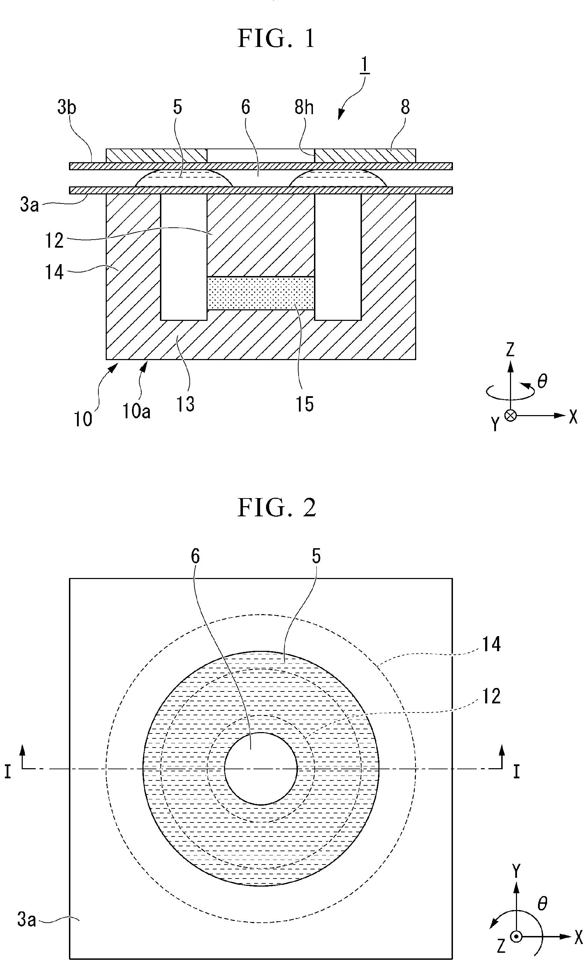

Fig. 1 is a side cross-sectional view of a support device of a first embodiment along line I-I of Fig. 2. Fig. 2 is a plan view of the support device of the first embodiment in which a second plate and a magnetic plate are not illustrated.

In the present application, a Z direction, an X direction, and a Y direction of an orthogonal coordinate system are defined as follows. The Z direction is a central axis direction of a support device 1. A +Z direction (first direction) is a direction from a magnet unit 10 toward a magnetic plate 8, and a -Z direction (second direction) is a direction opposite to the +Z direction. For example, the Z direction is a vertical direction, and the +Z direction is an upward direction. The X direction and the Y direction are directions perpendicular to the Z direction. For example, the X direction and the Y direction are horizontal directions. At least one of the X direction and the Y direction may be referred to as an XY direction. A circumferential direction of a central axis of the support device 1 is referred to as a θ direction.

As illustrated in Fig. 1, the support device 1 includes the magnet unit 10, a first plate (first member) 3a, a second plate (second member) 3b, the magnetic plate (magnetic member) 8, and a magnetic fluid 5. Constituent members of the support device 1 are disposed coaxially with respect to the central axis of the support device 1.

The magnet unit 10 includes an iron core 10a and a permanent magnet 15, and generates a magnetic force. The magnet unit 10 has an axisymmetric shape with respect to an axis of symmetry parallel to the Z direction.

The iron core 10a is integrally formed of a magnetic material such as iron. The iron core 10a includes a column part 12, a cylinder part 14, and a connecting part 13.

The column part 12 is formed in a columnar shape. The column part 12 extends parallel to the Z direction.

The cylinder part 14 is formed in a cylindrical shape. The cylinder part 14 extends parallel to the Z direction. A length of the cylinder part 14 in the Z direction is equivalent to that of the column part 12. The cylinder part 14 accommodates the column part 12 therein in a radial direction. The column part 12 and the cylinder part 14 are disposed coaxially with a space therebetween in the radial direction.

The connecting part 13 is formed in an annular shape. The connecting part 13 connects the column part 12 and the cylinder part 14 at an end portion of the magnet unit 10 in the -Z direction.

The permanent magnet 15 is formed in a disc shape. The permanent magnet 15 is incorporated in a part of the column part 12 in the Z direction. The permanent magnet 15 is polarized in the Z direction. Since the permanent magnet 15 is disposed in the column part 12, the permanent magnet 15 is formed in a simple disc shape. Thereby, the manufacturing cost of the permanent magnet 15 is suppressed.

The first plate 3a and the second plate 3b are formed of a non-magnetic material. For example, the non-magnetic material is a metal material such as aluminum or stainless steel, or a resin material such as acryl or a fiber-reinforced resin. The first plate 3a and the second plate 3b have the same shape. Outer shapes of the first plate 3a and the second plate 3b are square in the example of Fig. 2, but may be other shapes. The outer shapes of the first plate 3a and the second plate 3b are larger than an outer shape of the magnet unit 10. The first plate 3a and the second plate 3b are formed in flat plate shapes, and are disposed with a thickness direction thereof in the Z direction. The first plate 3a is disposed in the +Z direction of the magnet unit 10. The first plate 3a is in contact with end portions of the column part 12 and the cylinder part 14 in the +Z direction. The first plate 3a is fixed to the magnet unit 10 by adhesion or the like. The second plate 3b is disposed in the +Z direction of the first plate 3a. The first plate 3a and the second plate 3b are disposed in parallel at a distance in the Z direction.

The magnetic plate 8 is formed of a magnetic material such as iron. The magnetic plate 8 is formed in a disc shape. The magnetic plate 8 has a through hole 8h at a center in the radial direction. When viewed from the Z direction, the through hole 8h has a circular shape. The magnetic plate 8 is disposed with a thickness direction thereof in the Z direction. The magnetic plate 8 is disposed in the +Z direction of the second plate 3b. The magnetic plate 8 is fixed to the second plate 3b by adhesion or the like.

When viewed from the Z direction, an outer shape of the magnet unit 10 substantially coincides with an outer shape of the magnetic plate 8. The outer shape of the magnet unit 10 and the outer shape of the magnetic plate 8 are both circular and have the same diameter as each other. When viewed from the Z direction, an outer shape of the column part 12 substantially coincides with an outer shape of the through hole 8h. The outer shape of the column part 12 and the outer shape of the through hole 8h are both circular and have the same diameter as each other.

A central axis of the magnetic plate 8 and a central axis of the magnet unit 10 may shift in the XY direction. In accordance with this, an edge of the magnetic plate 8 and an edge of the magnet unit 10 shift in the XY direction. At this time, a magnetic attractive force that urges the central axis of the magnetic plate 8 to coincide with the central axis of the magnet unit 10 is generated (edge effect).

The magnetic fluid 5 is a fluid in which magnetic microparticles such as magnetite are dispersed in a base liquid serving as a medium. Surfaces of the magnetic microparticles are covered with a surfactant, and aggregation of the magnetic microparticles is curbed. When a magnetic field is applied to the magnetic fluid 5, the magnetic fluid 5 deforms along magnetic flux lines and is urged to stay at that position. When the magnetic fluid 5 is deformed, a restoring force urging it back to its original shape is generated. When a magnetic field is applied to the magnetic fluid 5, a viscosity of the magnetic fluid 5 increases in some cases.

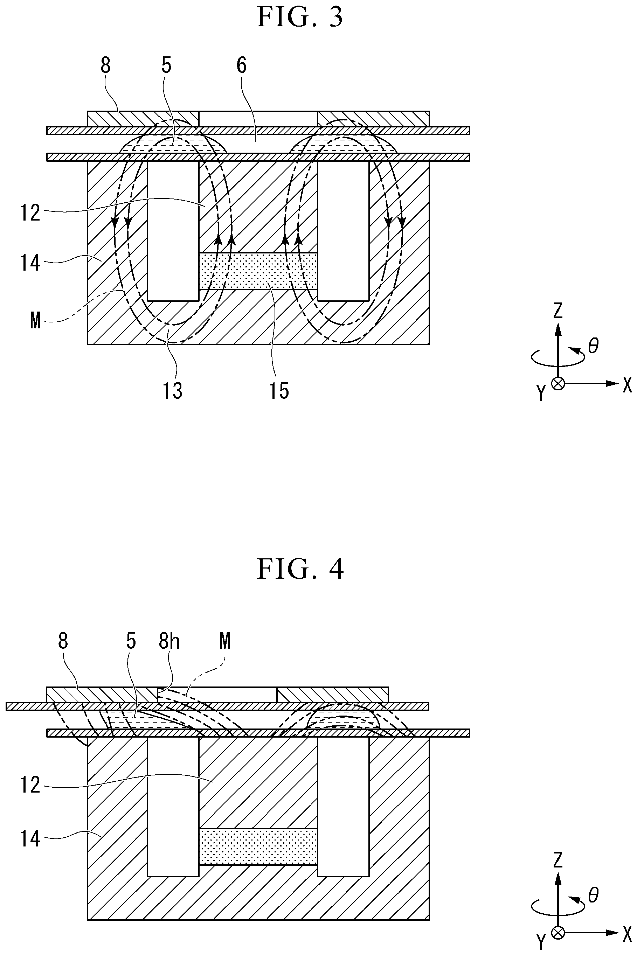

Fig. 3 is an explanatory view of a magnetic circuit. Due to a magnetomotive force of the permanent magnet 15, a magnetic circuit passing through the column part 12, the magnetic fluid 5, the magnetic plate 8, the cylinder part 14, and the connecting part 13 is formed in the support device 1. The magnetic circuit is formed over the entire circumference of the support device 1 in the θ direction. A magnetic flux line M passes through the magnetic circuit. The magnetic fluid 5 is oriented along the magnetic flux line M. Therefore, the magnetic fluid 5 exhibits a chevron shape in the cross section illustrated in Fig. 3. The magnetic fluid 5 is in close contact with the first plate 3a and the second plate 3b and is continuous in the θ direction. Thereby, a gas chamber 6 sealed by the magnetic fluid 5, the first plate 3a, and the second plate 3b is formed.

For example, the support device 1 supports a support object at the magnetic plate 8 (or the second plate 3b). There are cases in which an external force in the Z direction acts on the magnetic plate 8 from the support object. When the magnetic plate 8 is displaced in the Z direction, the magnetic fluid 5 is deformed. The magnetic fluid 5 exerts a restoring force urging it back to its original shape. Also, when the magnetic plate 8 is displaced in the Z direction, a pressure in the gas chamber 6 changes. The gas chamber 6 also exerts a restoring force urging it back to its original state. Since a magnitude of the restoring force is proportional to a magnitude of the displacement of the magnetic plate 8 in the Z direction, the same effect as that of a spring can be obtained. In addition to this, since a magnetic flux density of the magnetic fluid 5 increases as the displacement of the magnetic plate 8 in the -Z direction becomes larger, the restoring force is added. As a whole, a gradient of the restoring force (apparent spring constant) with respect to the displacement in the Z direction is larger than that of a normal linear spring. Thereby, the support device 1 exerts a support force more effectively in the Z direction than a normal spring.

There are cases in which an external force in a direction in which the magnetic plate 8 is inclined acts on the magnetic plate 8 from the support object. When the magnetic plate 8 is inclined, a distance between the first plate 3a and the second plate 3b decreases at a portion in the θ direction, and a distance between the first plate 3a and the second plate 3b increases at a portion on a side opposite thereto. At any of the portions, the magnetic fluid 5 is deformed and exerts a restoring force. Thereby, the support device 1 exerts a support force in a direction in which the magnetic plate 8 is inclined.

The support device 1 exhibits a damping effect due to the viscosity of the magnetic fluid 5.

Fig. 4 is an explanatory view of a support force in the XY direction. There are cases in which an external force in the XY direction acts on the magnetic plate 8 from the support object. When the magnetic plate 8 moves in the XY direction, the central axis of the magnetic plate 8 shifts in the XY direction from the central axis of the magnet unit 10. An edge of the magnetic plate 8 shifts in the XY direction from an edge of the magnet unit 10. Due to the edge effect described above, a magnetic attractive force urging the central axis of the magnetic plate 8 to coincide with the central axis of the magnet unit 10 is generated. Due to a restoring force due to the edge effect, the support device 1 exerts a support force in the XY direction.

When the magnetic plate 8 moves in the XY direction, a viscous shear force acts on the magnetic fluid 5. Thereby, the support device 1 exhibits a damping effect in the XY direction.

There are cases in which an external force in the θ direction acts on the magnetic plate 8 from the support object. As described above, the outer shape of the magnetic plate 8 and the outer shape of the magnet unit 10 are both circular. Therefore, even if the magnetic plate 8 rotates in the θ direction, the edge of the magnetic plate 8 does not shift from the edge of the magnet unit 10. The restoring force due to the edge effect described above does not occur. That is, the support object supported by the magnetic plate 8 is rotatable in the θ direction. The support device 1 can be used as an axial bearing (thrust bearing).

As described in detail above, the support device 1 of the embodiment includes the magnet unit 10, the first plate 3a, the second plate 3b, the magnetic plate 8, and the magnetic fluid 5. The magnet unit 10 generates a magnetic force. The first plate 3a is formed of a non-magnetic material and is disposed in the +Z direction of the magnet unit. The second plate 3b is formed of a non-magnetic material and is disposed in the +Z direction of the first plate 3a. The magnetic plate 8 is formed of a magnetic material and is disposed in the +Z direction of the second plate 3b. The magnetic fluid 5 is disposed between the first plate 3a and the second plate 3b.

Due to the restoring force of the magnetic fluid 5, the support device 1 exerts a support force in each direction. Due to the viscosity of the magnetic fluid 5, the support device 1 exhibits a damping effect in each direction. Therefore, the support device 1 can exhibit a support force and a damping effect for multiple degrees of freedom.

The magnet unit 10 includes the column part 12, the cylinder part 14, and the connecting part 13. The column part 12 extends parallel to the +Z direction. The cylinder part 14 extends parallel to the +Z direction and accommodates the column part 12 therein. The connecting part 13 connects the column part 12 and the cylinder part 14 at the end portion in the -Z direction opposite to the +Z direction. The first plate 3a is disposed at an end portion of the magnet unit 10 in the +Z direction.

Thereby, since the magnetic fluid 5 is disposed in an annular shape, the gas chamber 6 sealed with the magnetic fluid 5, the first plate 3a, and the second plate 3b is formed. When the magnetic plate 8 is displaced in the Z direction, a pressure in the gas chamber 6 changes and a restoring force is generated. Thereby, the support device 1 can exert a large support force in the Z direction.

The magnetic plate 8 has the through hole 8h. When viewed from the +Z direction, the outer shape of the column part 12 substantially coincides with the outer shape of the through hole 8h.

When viewed from the +Z direction, the outer shape of the magnet unit 10 substantially coincides with the outer shape of the magnetic plate 8.

When the magnetic plate 8 is displaced in the XY direction, a restoring force urging the central axis of the magnetic plate 8 to coincide with the central axis of the magnet unit 10 is generated. Thereby, the support device 1 can exert a support force in the XY direction.

The magnet unit 10 includes the permanent magnet 15 disposed in the column part 12 and polarized in the +Z direction.

Thereby, a shape of the permanent magnet 15 is simplified, and the manufacturing cost of the permanent magnet 15 is suppressed.

The magnet unit 10 has an axisymmetric shape with respect to an axis of symmetry parallel to the +Z direction.

Even if the magnetic plate 8 rotates in the θ direction, the restoring force due to the edge effect is not generated. The magnetic plate 8 is rotatable in the θ direction. Therefore, the support device 1 can be used as an axial bearing.

A first modified example of the first embodiment will be described.

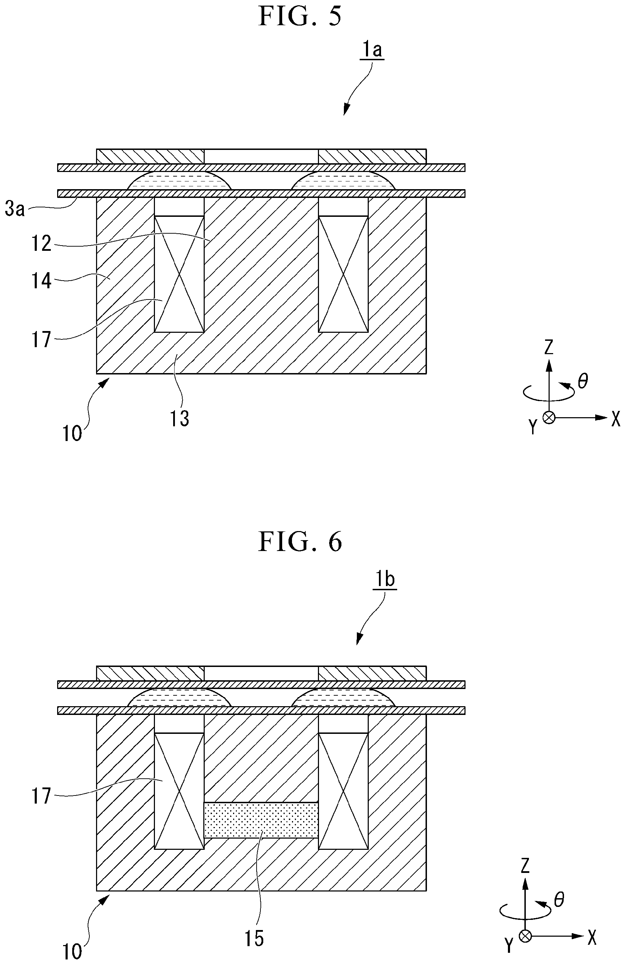

Fig. 5 is a side cross-sectional view of a support device of the first modified example of the first embodiment. Fig. 5 is a cross-sectional view of a portion corresponding to line I-I in Fig. 2. A support device 1a of the first modified example is different from that of the first embodiment in that it has an excitation coil 17 instead of the permanent magnet 15. Description of points of the first modified example which are the same as those in the first embodiment will be omitted.

The support device 1a includes the excitation coil 17. The excitation coil 17 is wound around the column part 12. When the excitation coil 17 is energized, the magnet unit 10 functions as an electromagnet. The excitation coil 17 is in contact with the connecting part 13. Thereby, heat of the excitation coil 17 is transferred to the magnet unit 10 and released to the outside. The excitation coil 17 is not in contact with the first plate 3a. Thereby, a thermal influence of the excitation coil 17 on the magnetic fluid 5 is curbed.

When an amount of current of the excitation coil 17 is changed, a magnetic force of the magnet unit 10 changes. Thereby, since an orientation strength of the magnetic fluid 5 changes, the restoring force of the magnetic fluid 5 changes. Therefore, when an amount of current of the excitation coil 17 is adjusted, a support force of the support device 1 can be adjusted according to the support object. Since it is not necessary to manufacture the support devices 1a of a plurality of types having different support forces, the manufacturing cost is suppressed.

When the support force of the support device 1a is changed, a natural frequency of a vibration system including the support object changes. The natural frequency can be adjusted by adjusting the amount of current of the excitation coil 17. For example, the natural frequency is tuned so that it does not coincide with a frequency of vibration generated in the support object (vibration damping effect). For example, the natural frequency is tuned to be lower than a frequency of vibration transmitted to the support object. At this time, a vibration isolation effect increases as the natural frequency becomes smaller. Thereby, the support device 1 functions as a vibration isolation device. Since it is not necessary to manufacture the support devices 1a of a plurality of types having different support forces, the manufacturing cost is suppressed.

A second modified example of the first embodiment will be described.

Fig. 6 is a side cross-sectional view of a support device of a second modified example of the first embodiment. Fig. 6 is a cross-sectional view of a portion corresponding to line I-I in Fig. 2. A support device 1b of the second modified example is different from those of the first embodiment and its first modified example in that it has the excitation coil 17 in addition to the permanent magnet 15. Description of points of the second modified example which are the same as those in the first embodiment or its first modified example will be omitted.

The support device 1b of the second modified example includes the excitation coil 17 in addition to the permanent magnet 15. Thereby, a strong support force and a damping effect can be exhibited for multiple degrees of freedom. Also, when an amount of current of the excitation coil 17 is adjusted, the support force can be adjusted according to the support object.

### (Second embodiment)

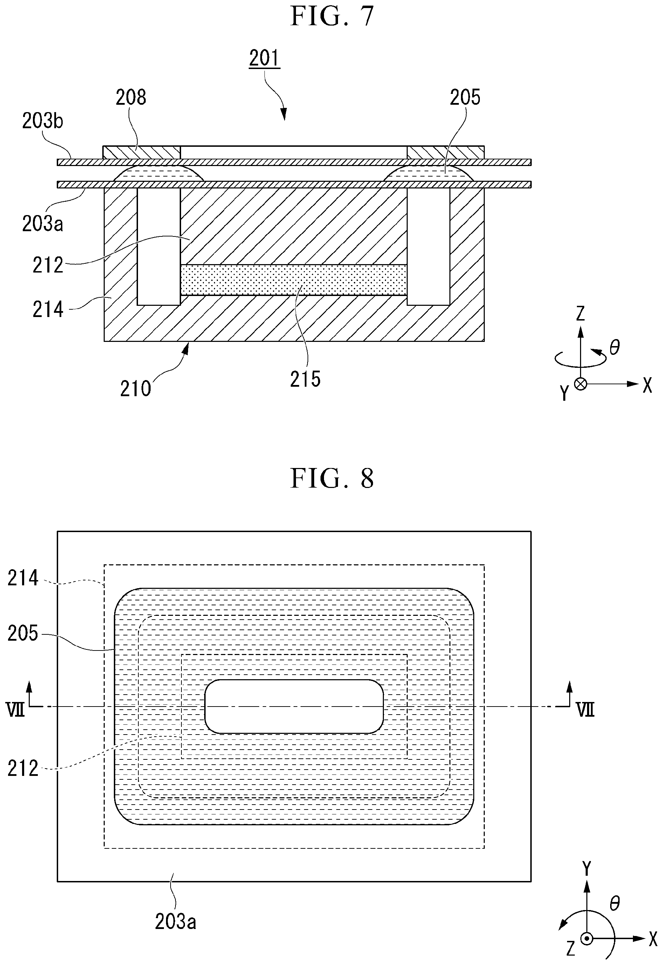

Fig. 7 is a side cross-sectional view of a support device of a second embodiment along line VII-VII in Fig. 8. Fig. 8 is a plan view of the support device of the second embodiment without describing a second plate and a magnetic plate. A support device 201 of the second embodiment is different from that of the first embodiment in that a magnet unit 210 has a non-axisymmetric shape. Description of points of the second embodiment which are the same as those in the first embodiment will be omitted.

The magnet unit 210 of the support device 201 has a non-axisymmetric shape with respect to a central axis of the support device 201 parallel to the Z direction. The magnet unit 210 includes a column part 212, a cylinder part 214, and a connecting part 213.

The column part 212 is formed in a shape of a square column. As illustrated in Fig. 8, a cross-sectional shape of the column part 212 perpendicular to the Z direction is a rectangular shape with the X direction as a longitudinal direction and the Y direction as a transverse direction.

The cylinder part 214 is formed in a shape of a square cylinder. The cylinder part 214 accommodates the column part 212 therein in the X direction and the Y direction.

Outer shapes of the first plate 203a and the second plate 203b are rectangular shapes with the X direction as a longitudinal direction and the Y direction as a transverse direction.

A magnetic plate 208 is formed in a shape of a square plate. The magnetic plate 208 has a through hole 208h at a center in the X direction and the Y direction. When viewed from the Z direction, a shape of the through hole 208h is a rectangular shape with the X direction as a longitudinal direction and the Y direction as a transverse direction.

When viewed from the Z direction, an outer shape of the magnet unit 210 substantially coincides with an outer shape of the magnetic plate 208. The outer shape of the magnet unit 210 and the outer shape of the magnetic plate 208 are both rectangular. Lengths of the magnet unit 210 and the magnetic plate 208 in the longitudinal direction are the same, and lengths thereof in the transverse direction are the same. When viewed from the Z direction, an outer shape of the column part 212 substantially coincides with an outer shape of the through hole 208h. The outer shape of the column part 212 and the outer shape of the through hole 208h are both rectangular. Lengths of the column part 212 and the through hole 208h in the longitudinal direction are the same, and lengths thereof in the transverse direction are the same. Thereby, the support device 201 exhibits an edge effect that urges a central axis of the magnetic plate 208 to coincide with a central axis of the magnet unit 210 in the XY direction.

There are cases in which an external force in a direction in which the magnetic plate 208 is inclined acts on the magnetic plate 208 from a support object of the support device 201. As in the first embodiment, the support device 201 exerts a support force in a direction in which the magnetic plate 208 is inclined. Particularly, when the magnetic plate 208 is inclined with the X axis as a center, an end portion of the magnetic plate 208 in the Y direction is largely displaced in the Z direction. Thereby, a magnetic fluid 205 is largely deformed and exerts a large restoring force. Therefore, it is desirable to support the support object by making a direction in which the support object tends to be inclined coincide with the Y direction. Thereby, the support device 201 can exert a large support force on the support object that tends to be inclined.

There are cases in which an external force in the XY direction acts on the magnetic plate 208 from the support object. When the magnetic plate 208 moves in the XY direction, the central axis of the magnetic plate 208 shifts in the XY direction from the central axis of the magnet unit 210. An edge of the magnetic plate 208 shifts in the XY direction from an edge of the magnet unit 210. Due to the edge effect described above, a magnetic attractive force that urges the central axis of the magnetic plate 8 to coincide with the central axis of the magnet unit 10 is generated. Due to a restoring force due to the edge effect, the support device 1 exerts a support force in the XY direction.

There are cases in which an external force in the θ direction acts on the magnetic plate 208 from the support object. As described above, the outer shape of the magnetic plate 208 and the outer shape of the magnet unit 210 are both rectangular. Therefore, when the magnetic plate 208 rotates in the θ direction, the edge of the magnetic plate 208 shifts from the edge of the magnet unit 210. Due to the edge effect described above, a magnetic attractive force that urges the edge of the magnetic plate 208 to coincide with the edge of the magnet unit 210 is generated. Due to the restoring force due to the edge effect, the support device 201 exerts a support force in the θ direction. Thereby, the support device 201 exhibits a support force and a damping effect for all six degrees of freedom.

As described in detail above, the magnet unit 210 of the support device 201 of the second embodiment has a non-axisymmetric shape.

When the magnetic plate 208 rotates in the θ direction, the restoring force due to the edge effect is generated. Therefore, the support device 1 can exert a support force in the θ direction.

As described above, the column part 212 of the support device 201 has a shape of a square column, and the cylinder part 214 has a shape of a square cylinder. On the other hand, the column part may have a shape of a polygonal column other than a square, and the cylinder part may have a shape of a polygonal cylinder other than a square. Also, the column part may have a non-columnar shape (for example, an elliptical columnar shape) other than a polygon, and the cylinder part may have a non-cylindrical shape (for example, an elliptical cylindrical shape) other than a polygon.

### (Third embodiment)

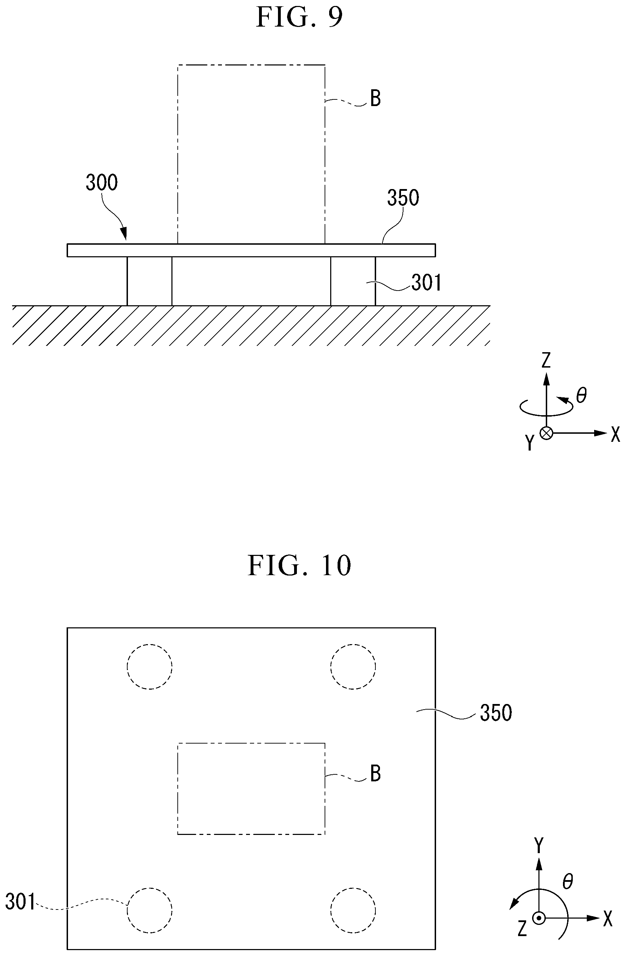

Fig. 9 is a side view of a support unit of a third embodiment, and Fig. 10 is a plan view thereof. A support unit 300 includes a base member 350 and a support device 301.

The base member 350 is formed in a shape of a square plate. The base member 350 supports a support object B disposed on a surface thereof in the +Z direction.

The support device 301 is the support device 1, 1a, 1b, or 201 of the above-described embodiments or their modified examples. The support device 301 is mounted on a surface of the base member 350 in the -Z direction. For example, a first end portion (for example, a magnetic plate or a second plate) of the support device 301 is mounted on the base member 350, and a second end portion (for example, a magnet unit) of the support device 301 is fixed to the outside (for example, the ground). The support device 301 is mounted on the base member 350 so that a central axis of the support device 301 is perpendicular to a surface of the base member 350. A plurality of support devices 301 are disposed apart from each other in the X direction and the Y direction. In the example of Fig. 10, four support devices 301 are disposed at four corners of the base member 350.

When the support device 301 is the support device 1, 1a, or 1b of the first embodiment or its modified examples, the support device 301 exerts a support force in each direction except the θ direction. Since the support unit 300 includes the plurality of support devices 301, the support unit 300 exerts a support force in all directions including the θ direction. Therefore, the support unit 300 can exhibit a support force and a damping effect for multiple degrees of freedom.

A modified example of the third embodiment will be described.

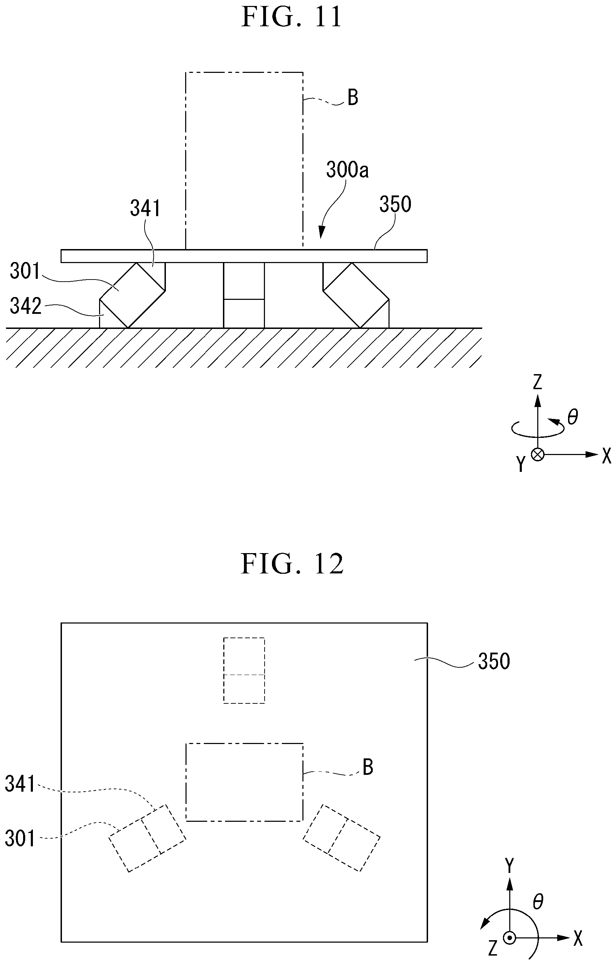

Fig. 11 is a side view of a support unit of a modified example of the third embodiment, and Fig. 12 is a plan view thereof. A support unit 300a of the modified example is different from that of the third embodiment in that it has a first angle adjusting member 341. Description of points of the modified example which are the same as those in the third embodiment will be omitted.

The support devices 301 are each disposed in an inclined state with respect to the base member 350 so that the central axis of the support device 301 intersects the surface of the base member 350 at an angle other than a right angle. In the example of Figs. 11 and 12, the support devices 301 are disposed so that central axes of the plurality of support devices 301 pass through a vicinity of a center point of the support object B.

The first angle adjusting member 341 adjusts a mounting angle of the support device 301 with respect to the base member 350. For example, the first angle adjusting member 341 is formed in a shape of a triangular column. One surface of an outer circumference of the first angle adjusting member 341 is mounted on the base member 350, and the other surface thereof is mounted on the support device 301. Thereby, the support device 301 is mounted on the base member 350 in an inclined state.

A second angle adjusting member 342 adjusts a mounting angle of the support device 301 with respect to the outside.

The support device 1, 1a, 1b, or 201 of the above-described embodiments or their modified examples exerts a large support force in the Z direction compared to that in a direction perpendicular to the Z direction. In the support unit 300 of the third embodiment illustrated in Figs. 9 and 10, a support force in the Z direction and a support force in the XY direction are different.

On the other hand, the support unit 300a of the modified example includes the first angle adjusting member 341 that adjusts a mounting angle of the support device 301 with respect to the base member 350. Thereby, a support force of the support unit 300 in each direction can be adjusted. For example, when vibration is generated in the support object B or vibration is transmitted to the support object B, a support force of the support unit 300a in the vibration direction is increased. Also, when the first angle adjusting members 341 of a plurality of types having different angles are prepared, the support force of the support unit 300 can be adjusted in each direction. Since it is not necessary to manufacture the support devices 301 of a plurality of types each exerting a large support force in different directions, the manufacturing cost can be suppressed.

In the third embodiment and its modified example described above, the first end portion of the support device 301 is mounted on the base member 350, and the second end portion is fixed to the outside (for example, the ground). The outside to which the second end portion is fixed may also be a ceiling. In this case, the support units 300 and 300a support the support object B in a suspending manner. Also, the outside to which the second end portion is fixed may be a conveying device or a loading platform of a vehicle.

According to at least one embodiment described above, the magnet unit 10, the first plate 3a, the second plate 3b, the magnetic plate 8, and the magnetic fluid 5 are provided. Thereby, the support device 1 can exhibit a support force and a damping effect for multiple degrees of freedom.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### [Reference Signs List]

1, 1a, 1b, 201, 301 Support device
3a First plate (first member)
3b Second plate (second member)
5 Magnetic fluid
6 Gas chamber
8 Magnetic plate (magnetic member)
8h Through hole
10, 210 Magnet unit
12 Column part
13 Connecting part
14 Cylinder part
300, 300a Support unit
341 First angle adjusting member (angle adjusting member)
350 Base member

## Claims

1. A support device comprising:
a magnet unit generating a magnetic force;
a first member formed of a non-magnetic material and disposed in a first direction of the magnet unit;
a second member formed of a non-magnetic material and disposed in the first direction of the first member;
a magnetic member formed of a magnetic material and disposed in the first direction of the second member; and
a magnetic fluid disposed between the first member and the second member.

2. The support device according to claim 1, wherein
the magnet unit includes:
a column part extending parallel to the first direction;
a cylinder part extending parallel to the first direction and accommodating the column part inside; and
a connecting part connecting the column part and the cylinder part at an end portion in a second direction opposite to the first direction, and
the first member is disposed at an end portion of the magnet unit in the first direction.

3. The support device according to claim 2, wherein
the magnetic member has a through hole, and
an outer shape of the column part substantially coincides with an outer shape of the through hole when viewed from the first direction.

4. The support device according to any one of claims 1 to 3, wherein an outer shape of the magnet unit substantially coincides with an outer shape of the magnetic member when viewed from the first direction.

5. The support device according to claim 2 or 3, wherein the magnet unit includes a permanent magnet disposed in the column part and polarized in the first direction.

6. The support device according to any one of claims 1 to 5, wherein the magnet unit includes an excitation coil.

7. The support device according to any one of claims 1 to 6, wherein the magnet unit has an axisymmetric shape with respect to an axis of symmetry parallel to the first direction.

8. The support device according to any one of claims 1 to 6, wherein the magnet unit has a non-axisymmetric shape.

9. A support unit comprising:
a base member supporting a support object; and
a plurality of support devices according to any one of claims 1 to 8 mounted on the base member.

10. The support unit according to claim 9, further comprising an angle adjusting member configured to adjust a mounting angle of each of the support devices with respect to the base member.
